# EUROPEAN PATENT SPECIFICATION

(11) **EP 4 472 135 B1**
(45) Date of publication and mention of the grant of the patent: **13.05.2026**
(21) Application number: 24177842.2
(22) Date of filing: 24.05.2024
(51) Int. Cl.: H04L 9/40, G06F 21/62, G06F 16/29

(54) **SYSTEMS AND METHODS FOR GENERATING AND MANAGING SECURITY LEVEL-AWARE MAP**
SYSTEME UND VERFAHREN ZUR ERZEUGUNG UND VERWALTUNG EINER SICHERHEITSEBENENBEWUSSTEN KARTE
SYSTÈMES ET PROCÉDÉS DE GÉNÉRATION ET DE GESTION DE CARTE SENSIBLE AU NIVEAU DE SÉCURITÉ

(30) Priority: 31.05.2023 US 202363469943 P; 20.02.2024 US 202463555746 P
(43) Date of publication of application: 04.12.2024
(73) Proprietor: Palantir Technologies Inc., Aventura, Florida 33180 (US)
(72) Inventor: ZANGRI, Daniel, Denver, 80202 (US); MORGAN, Nicholas, Denver, 80202 (US); HERMAN, Hunter, Denver, 80202 (US); MEACHAM, Matthew, Denver, 80202 (US)
(74) Representative: Sayer, Robert David

(56) References cited:
- US-A1- 2008 301 570
- US-A1- 2015 031 399
- US-A1- 2018 349 007

## Description

### TECHNICAL FIELD

Certain embodiments of the present disclosure are directed to systems and method relating to data security, including systems and methods providing access control in relation to maps. For example, certain embodiments are directed to systems and methods for generating and/or managing maps. More particularly, some embodiments of the present disclosure provide systems and methods for generating and/or managing security level-aware maps.

### BACKGROUND

Large streams of data are captured to generate a map that provides a representation of an area. A data stream may include one or more data items that are more sensitive than others, for example in the sense that certain users may not be permitted to access one or more data items. However, it is challenging to control which data item(s) is or are shown on a map.

Hence it is highly desirable to improve the techniques for generating a map associated with a security level to control what data items are presented on the map. US 2018/349007 A1 discloses systems and methods for geo-fenced dynamic dissemination. US 2015/031399 A1 discloses a method of digital publication monitoring by geo-location. US 2008/301570 A1 discloses a collaborative information sharing system that displays a spaciotemporal rendering with icons that represent items of interest.

### SUMMARY

The invention is set forth in the claims. Certain embodiments of the present disclosure are directed to access control in relation to maps, for example systems and methods for generating and/or managing maps. More particularly, some embodiments of the present disclosure provide systems and methods for generating and/or managing security level-aware maps.

According to some embodiments, a method for generating and managing a security level-aware map includes receiving a map request from a first user to generate a map with a map security level, determining if the map security level satisfies a first security condition, in response to determining that the map security level satisfies the first security level threshold, generating the map with the map security level, receiving a query from the first user, the query including one or more query parameters, identifying a data feed associated with the query, receiving the data feed from a data source, the data feed including a plurality of data items and each data item corresponding to a corresponding data security level, for each data item of the plurality of data items, determining whether the data item satisfies a second security condition, and adding one or more data items of the plurality of data items that satisfy the second security condition on the map. The method is performed using one or more processors.

According to certain embodiments, a computing device for generating and managing a security level-aware map comprises a processor and a memory having a plurality of instructions stored thereon that, when executed by the processor, causes the computing device to receive a map request from a first user to generate a map with a map security level, determine if the map security level satisfies a first security condition, in response to determination that the map security level satisfies the first security level threshold, generate the map with the map security level, receive a query from the first user, the query including one or more query parameters, identify a data feed associated with the query, receive the data feed from a data source, the data feed including a plurality of data items and each data item corresponding to a corresponding data security level, for each data item of the plurality of data items, determine whether the data item satisfies a second security condition, and add one or more data items of the plurality of data items that satisfy the second security condition on the map.

According to certain embodiments, a non-transitory computer-readable medium storing instructions for generating and managing a security level-aware map, the instructions when executed by one or more processors of a computing device, cause the computing device to receive a map request from a first user to generate a map with a map security level, determine if the map security level satisfies a first security condition, in response to determination that the map security level satisfies the first security level threshold, generate the map with the map security level, receive a query from the first user, the query including one or more query parameters, identify a data feed associated with the query, receive the data feed from a data source, the data feed including a plurality of data items and each data item corresponding to a corresponding data security level, for each data item of the plurality of data items, determine whether the data item satisfies a second security condition, and add one or more data items of the plurality of data items that satisfy the second security condition on the map.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a system for streaming, storing, and processing real-time data according to certain embodiments of the present disclosure.
FIG. 2 is a simplified diagram showing a computing system for implementing one or more components or all components of the system for streaming, storing, and processing real-time data in accordance with at least one example set forth in the disclosure.
FIG. 3 illustrates an example diagram for entities according to some embodiments of the present disclosure.
FIG. 4 is a simplified diagram showing an example of a map security manager according to one embodiment of the present disclosure.
FIG. 5 is a simplified diagram showing a concept of different security levels according to one embodiment of the present disclosure.
FIG. 6 is a simplified diagram showing a method for generating and managing a security level-aware map according to one embodiment of the present disclosure.

### DETAILED DESCRIPTION

Large streams of data are captured to generate a map that provides a representation of an area. A data stream may include one or more data items that are more sensitive than others. However, it is challenging to control which data item is shown on a map. Example embodiments relate to data security and access control in relation to managing and generating maps, which may also control how much data is required to be transmitted, decoded and displayed by a user terminal for generating a map, offering advantages in terms of bandwidth and processing efficiency, in addition to improved data security and access control. Furthermore, a displayed map comprising a restricted number of data items may appear less cluttered with less overlap between nearby data items which may make the map more intelligible to users.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

In certain embodiments, a security level-aware map is generated to stream real-time data to the map for creating a trustworthy and seamless shared understanding of an area, for example a two-dimensional geographic area. However, not all data have the same security level. To control what data is presented on a map, each map is associated with a security level. As an example, in operational use-cases, real-time data feed is filtered based on a security level associated with the map to allow how much data from the data feed is presented on the map.

In some embodiments, a system (e.g., a backend system) for streaming, storing, and processing real-time data is provided. For example, the system (e.g., the backend system) for streaming, storing, and processing real-time data is built using one or more storage layers, one or more computation layers, and/or one or more query layers to serve as a fast and/or horizontally-scalable solution for different shapes and/or sizes of real-time data.

According to certain embodiments, the system may use one or more computing models to process the high-scale, real-time data (e.g., real-time geospatial data). In certain embodiments, a computing model, also referred to as a model, includes a model to process data. In certain embodiments, a model includes, for example, an AI model, a machine learning (ML) model, a deep learning (DL) model, an image processing model, an algorithm, a rule, other computing models, a large language model (LLM), and/or a combination thereof.

According to certain embodiments, a language model is a computing model that can predict the probability of a series of words, for example, based on the text corpus on which it is trained. In some embodiments, a language model can infer word probabilities from context. In some embodiments, a language model can generate word combinations (and/or sentences) that are coherent and contextually relevant. In certain embodiments, a language model can use a computing model that has been trained to process, understand, generate, and manipulate language. In some embodiments, a language model can be useful for natural language processing, including receiving natural language prompts and providing natural language responses, speech recognition, natural language understandings, and/or the like. In certain embodiments, a language model includes an n-gram, exponential, positional, neural network, and/or other type of model.

According to some embodiments, a large language model ("LLM") is a type of language model that has been trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like.

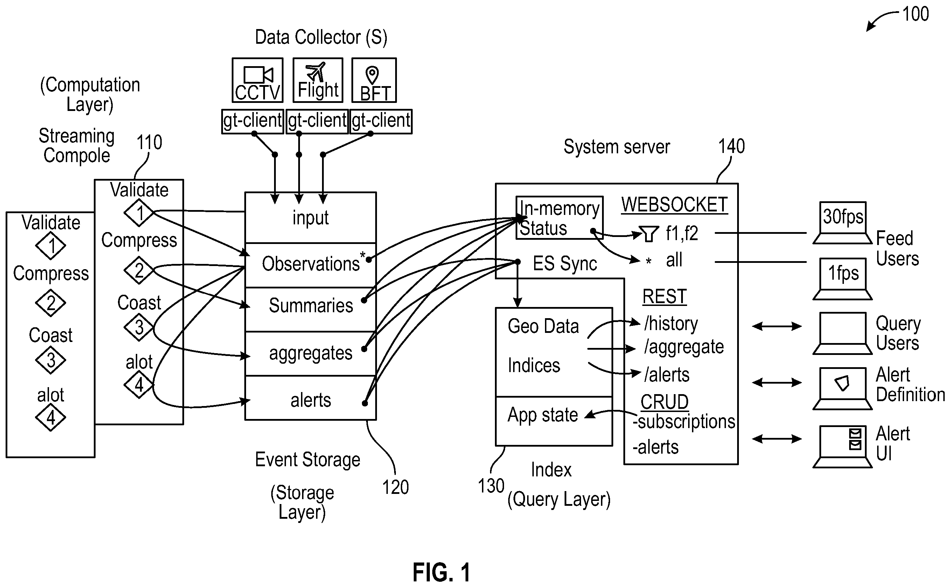

FIG. 1 is a simplified diagram showing a system for streaming, storing, and processing real-time data according to certain embodiments of the present disclosure. This diagram is merely an example. One of ordinary skill in the art would recognize many variations, alternatives, and modifications. For example, the system 100 for streaming, storing, and processing real-time data includes a computation layer 110, a storage layer 120, a query layer 130, and a system server 140. Although the above has been shown using a selected group of components for the system for streaming, storing, and processing real-time data, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present disclosure.

In some examples, the system 100 (e.g., a backend system) for streaming, storing, and processing real-time data is configured to perform one or more or all of the following tasks:
1. Provide a low-latency system for streaming real-time location data according to certain embodiments.
2. Provide a system for querying and/or aggregating historical location data collected for longer-term storage (e.g., with one or more retention controls) according to some embodiments.
3. Provide real-time geofence alerting for data entering the system that meet one more configurable queries according to certain embodiments.
4. Act as a source by which geotemporal series can be referenced from one or more certain objects according to some embodiments.
5. Provide one or more APIs for bulk uploading data to the system's history store according to certain embodiments.

In certain examples, the system 100 (e.g., a backend system) for streaming, storing, and processing real-time data provides two broad paths for data entering the system:
1. Fast path: data entering the system are written to the storage layer 120 according to some embodiments. For example, the computation layer 110 performs basic validation. As an example, the system server 140 sends the data out over any active, relevant data subscription.
2. Slow path: after passing through the fast path, the computation layer 110 performs one or more processing jobs on the data for one or more or all of the following tasks according to certain embodiments:
   a) Data summarization: before the data are stored in the query layer 130 for querying, data are deduplicated by one or more configurable levels of time and distance (e.g., users of the system 100 can determine that for a data type, they wish to only save a single point for a time period of Y length if the entity has moved less than X meters) according to some embodiments.
   b) Alerts: perform real-time alerting, such as when an entity enters and/or exits a user-defined region, according to certain embodiments.
   c) Aggregations: bucketing data by one or more time windows and/or filters to see one or more aggregate views (e.g., one or more histograms) of data flowing through the system 100 according to some embodiments.

In some examples, data entering the system 100 (e.g., a backend system) for streaming, storing, and processing real-time data includes the fields for series identification, entity identification, entity type, position, and timestamp (e.g., date and time). For example, one or more live data subscriptions, one or more history queries, and/or one or more alerts are represented as one or more queries over any of these fields. As an example, the data entering the system 100 (e.g., a backend system) contain one or more extra extension properties as additional metadata.

According to some embodiments, the system 100 (e.g., a backend system) for streaming, storing, and processing real-time data includes a separate integration service for basic real-time and/or bulk upload integrations. For example, the system 100 (e.g., a backend system) also provides a Java client for streaming data to the storage layer 120.

According to certain embodiments, the system 100 (e.g., a backend system) for streaming, storing, and processing real-time data provides a subscription API, a path history API, and an aggregation API. For example, the system 100 (e.g., a backend system) provides basic bulk upload functionality and/or real-time alerting.

According to some embodiments, data from the system 100 (e.g., a backend system) are viewed in one or more or all of the following ways:
a) Live layers
b) Track search
c) User-requested aggregations
d) AI Aggregations
e) Real-time alerting
f) Track data linked to certain objects

Certain embodiments of the present disclosure include systems and methods for streaming geotemporal data. In some embodiments, stream processing is a fundamentally different paradigm from batch processes for two major reasons: 1) a stream of data can be arbitrarily large (e.g., for practical purposes, infinite); and 2) streams are often timesensitive and made available to users in real-time. In some embodiments, time becomes a crucial aspect of streaming data. In certain embodiments, large amounts of data (e.g., infinite data) may not be practically stored. For example, a geotemporal data staging stack ingests greater than 40GB of data every hour. In some examples, while data storage is cheap, at that rate, at most on-premises deployments, storage may be used up in days, if not hours.

In some embodiments, infinite data means the system processing the data cannot wait until all the data is available, then run a batch job. In certain embodiments, time sensitivity means the system can barely wait at all before processing data. For example, some systems demand sub-second (e.g., less than 1 second) latency. In certain embodiments, stream processing platforms have one or more of three parts: 1) an unbounded queue to accept writes from source systems; 2) a streaming data analysis framework that processes records from the queue; and 3) a traditional data store where analysis results get written.

According to certain embodiments, the system 100 includes features of tracking entities (e.g., objects, planes, ships, etc.) through time and space to support analytic workflows. For example, the analytic workflows include: showing where this ship has gone this year; and/or listing the planes that landed at this airport this month. In some embodiments, the system can receive streaming geotemporal data with sub-second latencies.

According to some embodiments, an observation refers to a location of an entity at a moment in time. In some embodiments, an entity refers to an object, a person, a moving object, a building, a static object, and/or the like. In some embodiments, a track refers to a time series of observations. In certain embodiments, a lifecycle of an observation includes an input process, a validation process, and/or an analysis process. In some embodiments, the system includes one or more interactive parts for an observation. For example, the system includes an interface to allow receiving (e.g., writing) an observation (e.g., by a data source system), a communication channel (e.g., a websocket endpoint) that continually serves the latest observations, and/or a software interface (e.g., Conjure API) for building heatmaps, querying an entity's movements, and/or the like.

In some examples, a data structure for an observation includes a seriesType, seriesId and entityId. In certain examples, the seriesId is the unique identifier for the track that contains the observation (e.g., seriesId might be "A-airline997-november-8"). In some examples, the entityId is the unique identifier of an entity (e.g., "A-enterprise") and the field can be used to query over the full set of tracks for the ones relevant to a specific entity. In certain examples, the seriesType corresponds to the data source, for example, a ship tracking service.

In certain embodiments, the observation's lifecycle begins with a push from a client source system. For example, a client system writes the observation to a proxy. As an example, the proxy forwards the observation to the tracking service. In some embodiments, the observation is serialized (e.g., Avro binary). In certain embodiments, a validator job loads the observation, determines whether the observation is valid, and sends the observation (e.g., the serialized observation) to the tracking service based on whether the observation is valid or not. In some embodiments, if the observation is invalid, the observation is sent to a component for error inputs, for example, to determine why the observation is invalid. In certain embodiments, if the observation is valid, the observation is submitted for search indexing operations and/or for communication operations via communication channels (e.g., websockets, websocket APIs (application programming interface), duplex communication channels). In some embodiments, both search indexing and communication operations should be low-latency. In some embodiments, the communication operations have sub-second latencies, whereas search indexing operations can be an order of magnitude slower.

According to some embodiments, the search indexing operations include, for example, reading the valid observation, writing the newest observation for the entity to a search engine periodically (e.g., downsampling, less frequent than the frequency of receiving the observations), serving the observation's track and individual points to search clients by the search engine, and/or the like. In certain embodiments, the system loads the valid observation and checks if any clients have subscribed to updates about the observation (e.g., 22nd fleet). In some embodiments, for each client interested in the observation, the system 100 enqueues the observation. In certain embodiments, after applying some checks and/or analysis (e.g., Is bandwidth available? Does the client already have newer data?), the observation is sent to a client.

According to certain embodiments, the system 100 can be deployed in one or more remote environments (e.g., cloud environments) and/or one or more on-premises environments. In some embodiments, the system 100 can be deployed with single nodes for small form factor on-premises stacks.

According to some embodiments, an observation refers to an event at a single time and place (e.g., a GPS (global position system) ping). In certain embodiments, a track refers to a time series of observations from the same source (e.g., the history of places that a shark wearing a GPS tag has been). In some examples, observations are schematized according to observation specifications. For example, the observation has the following data structure:

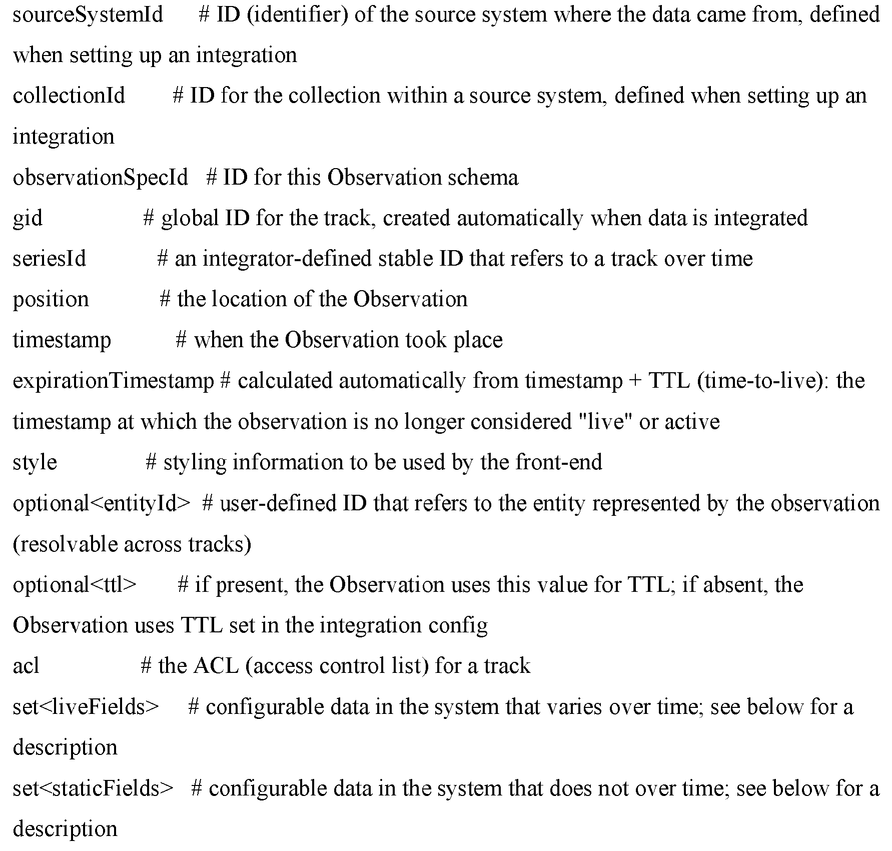

According to some embodiments, a field in the system is a key-value pair of a name and a typed value. For example, an entity's speed may have field name "speed" and field value of type double. In certain embodiments, a "live field" (e.g., liveFields) is expected to update with each observation in a track. Examples may include speed or heading. In some embodiments, for each timestamp on a track, the system stores the value of that live field. In certain embodiments, a "static field" is not expected to update with each observation in a track. Examples may include a plane's tail number or a ship's callsign. In some embodiments, the system stores the most recent value of a static property. In certain embodiments, the choice of live and static fields, along with their names and types, is configurable in an observation specification.

According to certain embodiments, each field in an observation can be configured with a certain trait (e.g., configuration), indicating how frontends should display the field. In some embodiments, there are three or more types of field traits:
FEATURED : This field is prioritized in displays and search fields. This trait does not affect the backend data store or queries to the system.
DEPRECATED : This field is deprecated, and as such is hidden from displays and search fields. This trait does NOT affect the backend data store or queries to the system.
HIDDEN_FROM_HISTOGRAM : This field is not included in histogram queries. For example, recommended for fields with a large number of unique values, which do not result in useful histograms.

According to some embodiments, a track is identified by a GID (e.g., global ID). For example, a GID includes geotimetrack. <sourceSystemId>. <collectionId>. <observationSpecId>. <seriesId>. In certain embodiments, the GID does not include entityId. In some examples, this is different compared to traditional integrations, where tracks were identified by the unique (seriesId, entityId) pair.

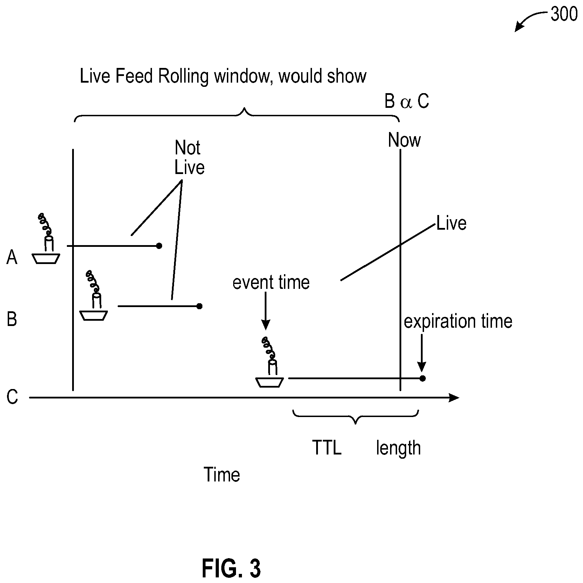

According to certain embodiments, liveness is a special property that is a combination of: when an observation took place (event time); and/or a time-to-live (TTL) time set by the data integrator. FIG. 3 illustrates an example diagram 300 for entities A, B, and C. In the example illustrated in FIG. 3, at current time "now", only ship C is considered Live, per its event time and the assigned expiration time on integration.

In some embodiments, the system can define a window of time for entities that will continue to update in the future. In certain embodiments, the window of time (e.g., rolling window length) means that the layer will include any data that was live in the past. In some embodiments, this is done via a range query on the expirationTimestamp field for the latest observation in a track.

According to certain embodiments, referring back to FIG. 1, data is integrated into the system 100 via a record extractor, which transforms source data into a desired data format that is then formatted into observations to be streamed to the system 100. In some embodiments, record extractor plugins run within a service (e.g., a geotemporal integration engine (GIE)). In certain embodiments, the GIE supports existing plugins. In some embodiments, the GIE also supports running plugins that are shipped as assets that are packaged from code that lives in exclusive or air-gapped environments. In certain embodiments, the system 100 and/or the GIE supports one or more plugins dynamically loaded and run by a GIE service.

According to some embodiments, the system 100 includes querying integrations. In certain embodiments, once data (e.g., geotemporal data) is received, stored, and/or processed in the system 100, at least two mechanisms through which data can be retrieved via one or more communication layers. In some embodiments, the one or more communication layers include one or more non-vectorized layers (e.g., duplex communication channels, websockets) and one or more vectorized layers.

According to certain embodiments, the one or more non-vectorized layers stream every observation coming from the integration to the client and aim to have low latency (e.g., sub-second latency). In some embodiments, the system 100 should use the one or more non-vectorized layers when the data source has low-cardinality (e.g., 10-100 unique tracks), fast-updating data where smooth updates to data (e.g., updates on a map) are important (e.g., assets flying). In certain embodiments, the system 100 should avoid using non-vectorized layers for high-cardinality or slowly-updating integrations (i.e. BAS (broad area search)). In some embodiments, the non-vectorized layers allow data to flow through the system 100 at the lowest possible latency.

According to some embodiments, the one or more vectorized layers, also referred to as vector tiles, query a snapshot of the most recent observation and encode them in a vectorized format for a compact data representation. In certain embodiments, the one or more vectorized layers can support layers containing a large number of observations (e.g., millions of observations) and should be used with high-cardinality and/or slowly-updating integrations (e.g., BAS, AIS (automated identification system)). In some embodiments, the system 100 should avoid vector tiles when streaming updates to data (e.g., updates to map) is important (e.g., ISR (intelligence, surveillance and reconnaissance)), since vector tiles update slowly. For example, vector tiles may update every 4 seconds at quickest, and every 10 minutes at slowest. In certain embodiments, vector tiles are supported by queries to a search engine (e.g., Elasticsearch). In some examples, data is written into the search engine after applying a down sampling window (e.g., every 30 seconds), and tracks encoded in vector tiles can update at the sampling frequency (e.g., once every 30 seconds) or at a maximum frequency of the sampling frequency.

According to certain embodiments, the system 100 may be exposed to client systems via one or more live layers, which may include, for example, subscriptions, feeds, or enterprise map layers (EMLs), and/or the like. In some embodiments, these can be configured in an administrative application. In certain embodiments, only feeds with data that the user has access to will show up. In some embodiments, one or more feeds can contain multiple observation specifications within them. In some embodiments, if a feed includes observations A and B that matches integrations A and B, but the user only has access to A, the user will still see the feed, but it will only contain data from integration A thereby providing access control, and reducing the amount of data that needs to be transmitted and/or decoded and displayed. In certain embodiments, one or more feeds are always filtered to only contain data the user has access to, even if the feed's query itself matches more data. In some embodiments, the system 100 refreshes the list of feeds periodically and/or by a trigger. For example, the system 100 refreshes the list of feeds from the administrative application every minute.

According to some embodiments, the system 100 queries a search engine (e.g., Elasticsearch). In certain embodiments, for every geo-temporal-backed data integration, the system 100 creates multiple search indices (e.g., Elasticsearch indices) to store the data in. For example, one stack can have hundreds, sometimes thousands, of indices. In some embodiments, to query the search engine, the system 100 specifies which indices the search engine should look at for the requested data. In certain embodiments, this can make queries more efficient, and it also addresses the fact that different indices may have different fields. For example, a BAS index and an ISR index have very different schemas.

According to certain embodiments, when the system 100 receives a query, it analyzes the query and determines which observation specifications could match the query. For example, the system may use heuristics like "Does this specification have the fields requested?" or "Does the query mention a particular observation specification?". In some embodiments, the system 100 may select and/or expand the matching observation specifications into the search indices to search.

According to some embodiments, the system 100 can provide one or more alerts on geotemporal data. In certain embodiments, a geotemporal alert is a query on geotemporal data that notifies users as soon as the query becomes true (e.g., when the alert "fires"). In some embodiments, geotemporal alerting workflows are managed on a configuration user interface (UI). For example, users can configure the alert's backing query (e.g., "alert when AIS data enters the Mediterranean Sea"). As an example, users can configure the query by clicking on a map to represent a geofenced region like the Mediterranean Sea (or any arbitrary shape). In this example, in the same UI, users can configure the alert's notifications. In certain embodiments, this attains low latency by running queries on geotemporal data upstream of the search engine, for example, in a processing job.

According to certain embodiments, the system 100 may include one or more types of alerts. In some embodiments, one type of alert is an entity state change alert, which is a type of alert indicating if geotemporal tracks flip from matching the alert query (or a list of queries, which are OR-ed with each other) to not matching, or vice versa. For example, "Fire an alert if AIS track with series ID F leaves the Mediterranean Sea."

In certain embodiments, one type of alert is a count timestamp alert, which is a type of alert indicating if the number of observations matching the alert query meets a configurable threshold during a fixed time interval. For example, "Fire an alert if more than 10,000 AIS observations enter the Mediterranean Sea between 10:00Z and 12:00Z."

In some embodiments, one type of alert is a multi-linked entity distance alert, which is a type of alert indicating if all query conditions are satisfied by a set of observations within a given distance of another observation (as defined by another observation query). For example, "Fire an alert if AIS track with series ID F and an ELINT track with series ID A111 both come within 500 meters of AIS track with series ID B."

In certain embodiments, one type of alert is a linked entity distance alert, which is a special case of multi-linked entity distance alerts, but only supporting one type of track. For example: "Fire an alert if AIS track with series ID F comes within 500 meters of AIS track with series ID B."

In some embodiments, one type of alert is a multi-threshold alert, which is a type of alerts indicating if the number of observations (possibly of multiple types) matching the alert query meets a configurable threshold over a sliding time window. This is not to be confused with a count timestamp alert, which is over a fixed time interval. For example: "Fire an alert if more than 10,000 AIS observations and more than 1,000 ELINT observations enter the Mediterranean Sea in any 60-minute sliding time window."

In certain embodiments, one type of alert is a threshold alert, which is a special case of multi-threshold alerts, but only supporting one type of track. For example: "Fire an alert if more than 10,000 AIS observations enter the Mediterranean Sea in any 60-minute sliding time window."

According to some embodiments, the system 100 allows administering integrations. In certain embodiments, integrations are administered from their corresponding source system specification. For example, one or more of the following features of integration can be configured:
Retention (retentionDays): the amount of time for which to retain data from an integration Index Rollover Period for the search engine (rolloverDays): the period of time you keep per historical ES index
Time-to-Live (ttlMillis): the defined time by which an integrated observation from this integration is considered "active" or "live", if the observation itself does not specify a TTL
Dedupe Parameters (dedupeTicks): the parameters used to decide if two data successive data points from integration are the same (or close enough where it's only needed to save one, which is useful for integrations that send many data points per second)
Aggregation View Preferences (aggregationView): a Boolean to say if feeds that include data from this integration should be displayed as aggregation bubbles (see screenshot in the extra information section below)
ACL (acl): a security level that can be set at the collection or source system level, for example as part of a data structure; for example, the security level may be comprised in a particular field associated with the data to which it relates. This sets the required classification and group membership needed to access data from an integration. In certain cases, the system allows for ACLs to be set on the individual track.
Monitors (monitors): configuration for monitors to alert on configured criteria.

In some embodiments, data from each source system is divided into collections, which are integrator-defined subsets of data in a source system (e.g., classified buckets of data and unclassified buckets of data from the same source, or different types of data from the same source). In certain embodiments, within each collection, an optional configuration can be specified per observation specification expected in the integration with one or more of the above settings.

In certain examples, retentionDays specifies for how many days data will be kept from a given integration. By default, in some examples, this is set to the global, service-level retention length. In some examples, retentionDays set at the integration-level may supersede the service-level setting. In certain examples, retention is based on the time data is integrated, not the timestamp on the data itself.

In some examples, dedupe parameters (e.g., dedupeTicks) are used to reduce the amount of fast-updating, high-volume data saved when a source is sending more data than is analytically valuable for historical analysis. In certain examples, dedupe only happens on successive Observations within the same track, for example, the path of a single plane within an integration, and only affects how much data is saved for history - it does not affect how much data is sent to subscriptions (e.g., websocket-based subscriptions).

In certain examples, ACLs can be set on the Source system or on a collection to describe the security level of data within that Source system or collection. In some examples, when ACL: is set, only users who meet the group and classification criteria will be able to see data from the source system or collection. In certain examples, a user must be working within an Investigation or map (or other artifacts) that has its authorization set at or above the ACL of data from the associated source system that they want to see.

In some examples, monitors can be created on the collection level. In certain examples, the system 100 treats a source system specification level monitor as equivalent to setting the monitor on every collection.

According to some embodiments, the system 100 includes one or more security modes. In certain embodiments, the system 100 supports two security models (e.g., modes), which are separate and mutually exclusive: the integration security model (e.g., integration security mode) and the track-level security (TLS) model (e.g., TLS mode). In some embodiments, the integration security model is accessible and can support a significantly higher scale of data. In certain embodiments, in this security model, each observation is secured based on the security of its collection (if available) or the security of its source system specification as a fallback.

In some embodiments, the track-level security model puts a separate ACL (access control list) on every track and allows for significantly greater granularity. In certain embodiments, however, this makes the processing in this security mode slower. In some embodiments, the system 100 implements the security approach at each step of an observation's lifecycle, for example, being indexed, being searched, triggering an alert, and being live-rendered.

According to certain embodiments, the system 100 implements security at index time. In some embodiments, using the integration security model, when an observation is sent to the system, it already contains security-related information. In some examples, using this model, the security of an observation is specified by the (Source System Spec ID, Collection ID) tuple it carries. In certain embodiments, using TLS model, the system 100 the observation to carry a configuration (e.g., AclConfig) specifying its security. In some embodiments, if an observation does not carry a configuration in the TLS mode, it is considered globally visible. In certain embodiments, a search engine may use a TLS model.

According to certain embodiments, the system 100 implements security at search time. In some embodiments, the system 100 implements security at alert time. Using the integration security model, in certain embodiments, the system 100 secures an alert criterion based on the intersection of specifications that the subscribers can access. Using TLS model, in some embodiments, the system 100 creates a proxy token for each subscriber, gets the accessible ACL IDs for each of them, and sets the intersection as the security for the alert criterion.

According to some embodiments, the system 100 implements security at render time. In certain embodiments, feeds are secured on creation time. In some embodiments, feeds are secured either based on a set of integrations or a set of ACL IDs.

According to certain embodiments, the system 100 may implement two or more options for security, for example, configuration-based (e.g., ACLs, groups, classification, etc.) security, and resource-delegating security. In some embodiments, the configuration-based security is specified in the configuration in the source system specification. In certain embodiments, the configuration-based security may follow one or more standard security specifications. In some embodiments, the system 100 specifies security based on the classification. In certain embodiments, the system 100 uses the security of data to avoid maintaining the same data with different securities. In some embodiments, the system 100 may include one or more mandatory nodes used to enforce mandatory requirements and/or one or more discretionary nodes used to enforce group-based security.

According to some embodiments, for the resource-delegating security model, downstream datasets inherit mandatory requirements (e.g., classifications, markings) from upstream data and/or downstream datasets do not inherit discretionary requirements (e.g., read permissions, view permissions). In some embodiments, the system 100 can receive specified security at either the collection level or the source-system level. In certain embodiments, if a collection lacks security specification, the security is inherited from the source system; that is, when present, the collection security takes precedence over source system security.

According to certain embodiments, the system 100 can purge old data on a configurable schedule. In some embodiments, the system 100 can purge old data based on the storage system. In certain embodiments, the system 100 can purge old data by deletion by query. In some embodiments, the system 100 can log events of creating, modifying, and/or loading geotemporal data. In certain embodiments, certain high-volume logging events are excluded by default and may be enabled in configuration if desired. In some embodiments, logging is done using one or more system endpoints (e.g., proxy) of the system 100.

According to some embodiments, the system 100 allows streaming and/or batch ingestion. In certain embodiments, the system 100 supports two pathways to ingest data: the streaming pipeline and the batch pipeline. In some embodiments, both mechanisms will make data searchable and considered for alerting, but may have different purposes for different workloads. In some embodiments, the majority of geotemporal data flows through the streaming pipeline.

According to certain embodiments, the streaming pipeline uses all streaming architecture (e.g., Apache Kafka, Apache Flink), enabling fire-and-forget and low-latency ingest of data. For example, data enters this pipeline through a proxy or an endpoint which clients can sink to via the provided client system. In some embodiments, the streaming pipeline is suited for data with at least one of the following characteristics: high-scale, low-latency, and continuous. For example, ISR data points stream in at 30 or more points a second and are streamed continuously through non-vectorized layers (e.g., websockets) to the front-end so users can see the plane moving in near real-time (e.g., less than 1 second, less than 3 seconds, less than 5 seconds, etc.).

In certain embodiments, due to the nature of streaming data, the system 100 may not store every point that comes in through the streaming pipeline; instead, the track can be downsampled such that the system 100 does not lose the fidelity of the track. In some embodiments, the system 100 may ignore a point if it's within a threshold time (e.g., 10 seconds) in event time and/or within a threshold distance (e.g., 5 km) of the previous point. In some embodiments, the threshold time and/or the threshold distance can be configured per integration. In certain embodiments, the system 100 may only update the most-recent observation in a track at a pre-determined frequency (e.g., every 30 seconds of processing time). In some embodiments, the predetermined frequency is not configurable.

According to some embodiments, the batch pipeline synchronously sinks data to the system 100 making it slower than the asynchronous and distributed streaming pipeline. In certain embodiments, one or more client systems can sink data using the geotemporalindexer service. In some embodiments, the batch pipeline is suited for data with at least one of the following characteristics: one-time imports of data, data that comes in batches, data where downsampling points are unacceptable, data that requires immediate notice of invalidity (e.g., streaming will sink invalid data to a dead letter queue, while the batch pipeline will return the errant data). For example, BAS data comes in batches when a satellite image has been processed and doesn't require low latency delivery of messages, and thus uses the batch pipeline. In some embodiments, since data through the batch pipeline doesn't come in continuously, the batch pipeline does not support real-time streaming of data to the front-end through one or more non-vectorized layers (e.g., websockets); however, it still supports rendering through one or more vectorized means.

As shown in FIG. 1, the system 100 for streaming, storing, and processing real-time data implements a system and method for user interface with manual geospatial correlation according to certain embodiments. In some examples, the system and method for user interface with manual geospatial correlation allows a user to see location data on a map and then manually associate the location data with an entity (e.g., a ship) and represent the entity's location accordingly. In other examples, the system and method for user interface with manual geospatial correlation provide a user interface that allows a user to start with location data and then link the location data to an entity that may or may not be on the map. For example, a sensor is outputting location data of Entity A from Source X, but the location data from Source X are not associated with an existing ID that has already been associated with location data about the same Entity A from Source Z. As an example, the user interface with manual geospatial correlation allows a user to manually correlate the location data from Source X with the existing ID that has already been associated with location data about the same Entity A from Source Z, and then to automatically update Entity A with the location data from Source X.

According to some embodiments, one or more users use at least one or more user interfaces with manual geospatial correlation to integrate and/or use geotemporal data in one or more workflows of the one or more users. For example, in certain operational contexts, location data is the foundation for building situational awareness around the world. As an example, being able to model the location data, secure the location data, see the location data, and/or combine the location data with one or more other data sources is important to at least some users' workflows.

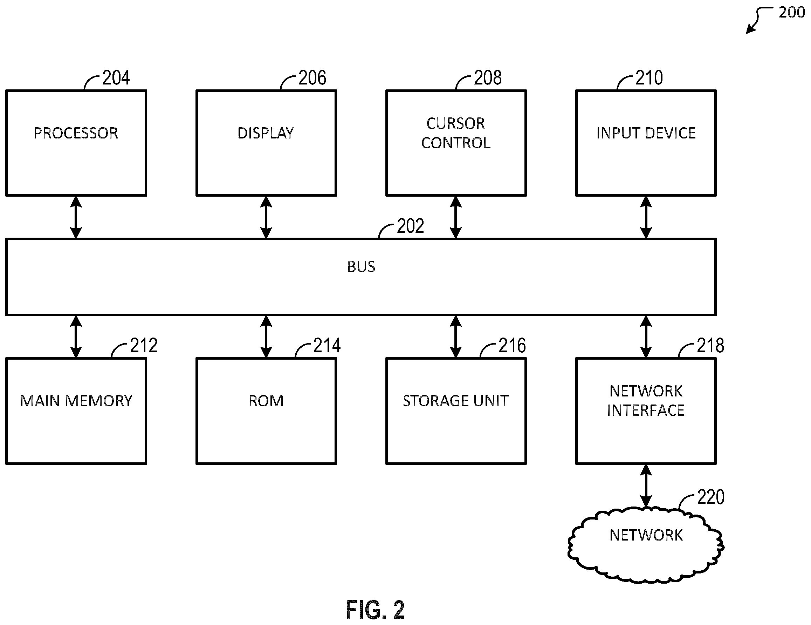

FIG. 2 is a simplified diagram showing a computing system for implementing one or more components or all components of the system 100 for streaming, storing, and processing real-time data in accordance with at least one example set forth in the disclosure. This diagram is merely an example. One of ordinary skill in the art would recognize many variations, alternatives, and modifications.

The computing system 200 includes a bus 202 or other communication mechanism for communicating information, a processor 204, a display 206, a cursor control component 208, an input device 210, a main memory 212, a read only memory (ROM) 214, a storage unit 216, and a network interface 218. In some examples, the bus 202 is coupled to the processor 204, the display 206, the cursor control component 208, the input device 210, the main memory 212, the read only memory (ROM) 214, the storage unit 216, and/or the network interface 218. In certain examples, the network interface 218 is coupled to a network 220. For example, the processor 204 includes one or more general purpose microprocessors. In some examples, the main memory 212 (e.g., random access memory (RAM), cache and/or other dynamic storage devices) is configured to store information and instructions to be executed by the processor 204. In certain examples, the main memory 212 is configured to store temporary variables or other intermediate information during execution of instructions to be executed by processor 204. For examples, the instructions, when stored in the storage unit 216 accessible to processor 204, render the computing system 200 into a special-purpose machine that is customized to perform the operations specified in the instructions. In some examples, the ROM 214 is configured to store static information and instructions for the processor 204. In certain examples, the storage unit 216 (e.g., a magnetic disk, optical disk, or flash drive) is configured to store information and instructions.

In some embodiments, the display 206 (e.g., a cathode ray tube (CRT), an LCD display, or a touch screen) is configured to display information to a user of the computing system 200. In some examples, the input device 210 (e.g., alphanumeric and other keys) is configured to communicate information and commands to the processor 204. For example, the cursor control component 208 (e.g., a mouse, a trackball, or cursor direction keys) is configured to communicate additional information and commands (e.g., to control cursor movements on the display 206) to the processor 204.

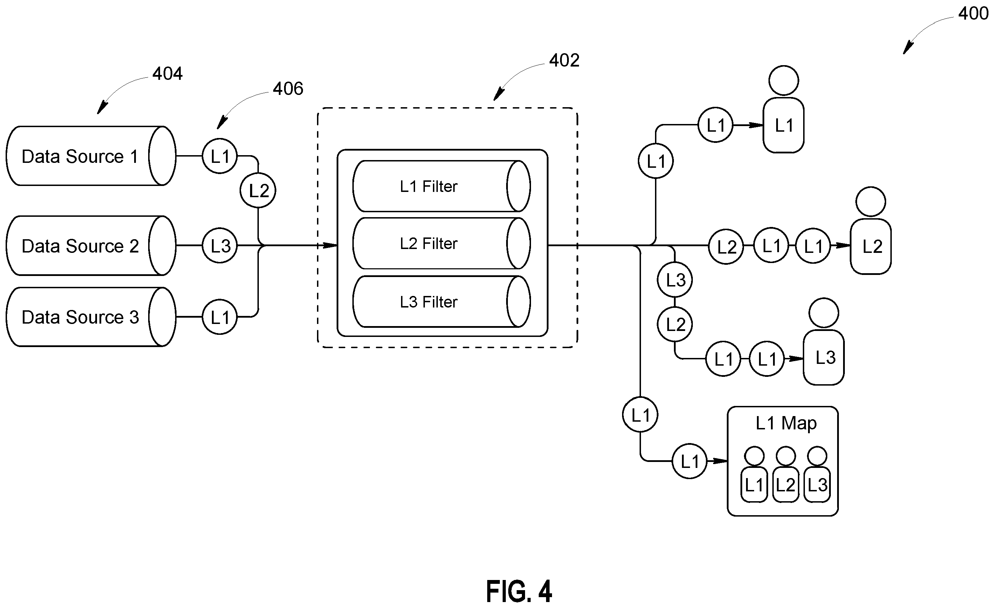

FIG. 4 is a simplified diagram showing a map security manager 400 (e.g., a software module, a software module that is a part of the system 100) that is configured to generate and manage a security level-aware map according to one embodiment of the present invention. This diagram is merely an example, which should not unduly limit the scope of the claims. One of ordinary skill in the art would recognize many variations, alternatives, and modifications.

In some embodiments, the map security manager 400 is further configured to determine whether a user has permission to generate or access a map. As described below, the map security manager 400 is configured to generate a map that corresponds to a requested map security level upon receiving a map request from a user if the requested map security level satisfies a first security condition. According to some embodiments, the first security condition includes a criterion indicating whether the user has permission to generate the map. For example, the first security condition is based on a user security level of the user. For example, the map security manager 400 may provide a data structure which includes data indicative of users, for example user identifiers, and their respective user security levels in an associated field. The map security manager 400 is configured to determine if the requested map security level is equal to or lower than the user security level of the user. For example, if the user security level of the user is level 3, the user can request to generate a map with a map security level of 1, 2, or 3. However, the level 3 user will not be able to request a map with the map security level higher than level 3. In other words, the user is allowed to generate a map with a map security level that is equal to or lower than the user security level of the user. The map security level of the map dictates how much information is shown on the map to the user. In other words, the map security manager 400 is configured to ensure that only those maps with information that the user is allowed to access are generated for the user.

According to some embodiments, the map security manager 400 is configured to authorize a user to access a pre-existing map with a predefined map security level upon receiving a selection of the pre-existing map if the predefined map security level satisfies the first security condition. For example, the first security condition is based on a user security level of the user. The map security manager 400 is configured to determine if the predefined map security level is equal to or lower than the user security level of the user.

Additionally, the map security manager 400 is further configured to determine how much information is shown on the map based on a query. To do so, the map security manager 400 includes one or more security filters 402 that are configured to identify a data feed associated with the query and filter the data feed based on a data security level of each data item included the data feed. Data items may have corresponding security levels provided as part of a data structure in which the security level for a particular data item is stored in a particular field for the data item.

In response to receiving one or more queries, the map security manager 400 is configured to determine one or more data feeds and its corresponding data sources. It should be appreciated that, in some embodiments, a query may be associated with a single data feed from a single data source or multiple data feeds from different data sources.

As one example, FIG. 4 illustrates receiving three data feeds from three different data sources 404. In some embodiments, each data feed includes one or more data items that corresponds to its respective data security level. Specifically, a first data feed from Data source 1 includes a plurality of data items having a data security level 1 (L1) and level 2 (L2), a second data feed from Data source 2 includes a plurality of data items having a data security level 3 (L3), and a third data feed from Data source 3 includes a plurality of data items having a data security level 1 (L1). It should be noted that the security level 3 is higher than the security levels 1 and 2, and the security level 2 is higher than security level 1.

In certain embodiments, the security filter 402 is configured to filter the data items based on the data security level. For example, L1 filter filters the data items and transmits one or more data items that have the data security level 1, L2 filter filters the data items and transmits one or more data items that have the data security levels 1 and 2, and L3 filter filters the data items and transmits one or more data items that have the data security levels 1, 2, and 3.

For example, the map security manager 400 is configured to authorize a user with a user security level 1 to access one or more data items that correspond to the data security level 1, a user with a user security level 2 to access one or more data items that correspond to the data security levels 1 and 2, and a user with a user security level 3 to access one or more data items that correspond to the data security levels 1, 2, and 3.

In some embodiments, the map security manager 400 is configured to provide one or more data items that correspond to the data security level 1 on a map that corresponds to a map security level 1 ("L1 map"). The L1 map is accessible by a user with a user security level 1, 2, or 3. Although it is not shown in FIG. 3, the map security manager 400 is configured to provide one or more data items that correspond to the data security levels 1 and 2 on a map that corresponds to a map security level 2 ("L2 map"). The L2 map is accessible by a user with a user security level 2 or 3. Additionally, the map security manager 400 is configured to provide one or more data items that correspond to the data security levels 1, 2, and 3 on a map that corresponds to a map security level 3 ("L3 map"). The L3 map is accessible by a user with a user security level 3.

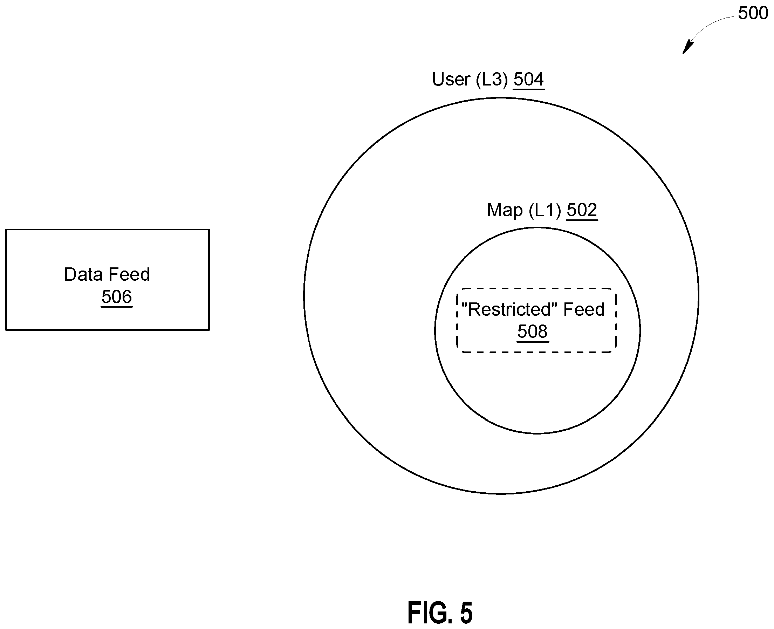

FIG. 5 is a simplified diagram 500 illustrating a concept of different security levels according to one embodiment of the present disclosure. This diagram is merely an example, which should not unduly limit the scope of the claims. One of ordinary skill in the art would recognize many variations, alternatives, and modifications.

In some examples, the diagram 500 illustrates that if a user 504 with a user security level 3 (L3) is accessing a map 502 with a map security level 1 (L1), only the restricted feed 508 is shown on the map 502. For example, if the data feed 506 includes a plurality of data items that correspond to data security levels 1, 2, and 3, the L3 user 504 is allowed to access all the data items. However, when the L3 user 504 is accessing the L1 map 502, the L3 user 504 will only see the restricted data feed 508 (e.g., one or more data items that correspond to the data security level 1). In other words, an amount of information from a data feed shown on the map is determined by the map security level of the map.

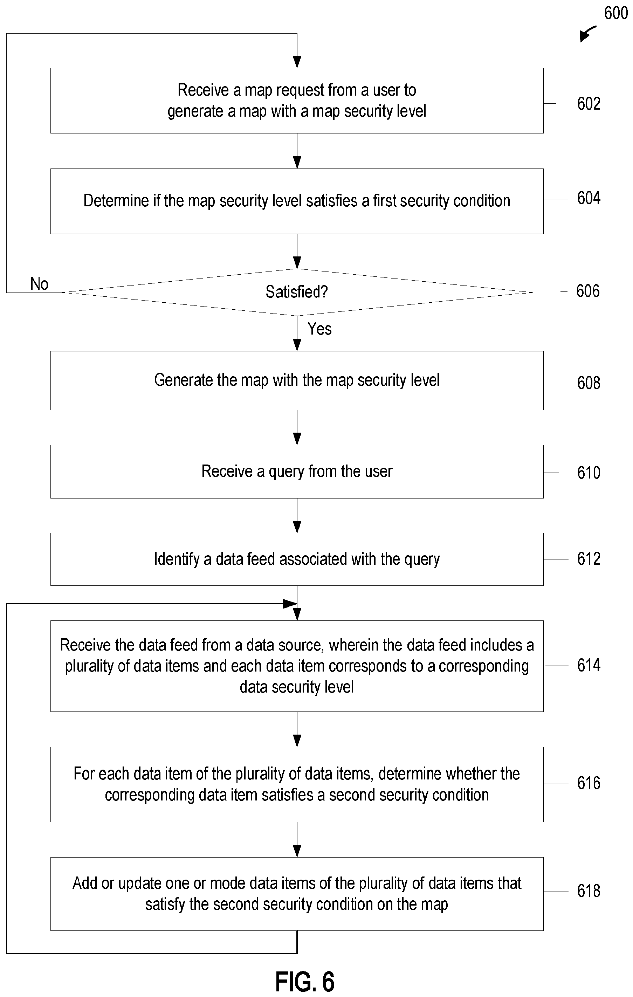

FIG. 6 is a simplified diagram showing a method for generating and managing a security level-aware map according to one embodiment of the present invention. This diagram is merely an example, which should not unduly limit the scope of the claims. One of ordinary skill in the art would recognize many variations, alternatives, and modifications. The method 600 includes processes 602-618 that are performed using one or more processors. Although the above has been shown using a selected group of processes for the method, there can be many alternatives, modifications, and variations. For example, some of the processes may be expanded and/or combined. Other processes may be inserted to those noted above. Depending upon the embodiment, the sequence of processes may be interchanged with others replaced.

In some embodiments, some or all processes (e.g., steps) of the method 600 are performed by a map security manager (e.g., 400) executed on a computing system (e.g., 200). In certain examples, some or all processes (e.g., steps) of the method 600 are performed by a computer and/or a processor directed by a code. For example, a computer includes a server computer (e.g., a correlation server/service) and/or a client computer (e.g., a personal computer). In some examples, some or all processes (e.g., steps) of the method 600 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

At the process 602, in some embodiments, a map request is received from a user to generate a map with a map security level. In some examples, the map request includes the map security level that the user wishes to generate. In certain examples, the map security level of the map indicates how much information is shown on the map and therefore how much information needs to be transmitted, decoded and displayed. For example, the information may include information regarding one or more entities, including an article, subject, object, being, creature, building, structure, and/or any existence that is detectable. According to some embodiments, the map request includes a request to access a pre-existing map with a predefined map security level.

At the process 604, in certain embodiments, the map security manager determines if the requested map security level satisfies a first security condition. According to some embodiments, the first security condition includes a criterion indicating whether the user has permission to generate the map. For example, the first security condition is based on a user security level of the user. The map security manager determines if the requested map security level is equal to or lower than the user security level of the user. For example, if the user security level of the user is level 3, the user can request to generate a map with a map security level of 1, 2, or 3. However, the level 3 user will not be able to request a map with the map security level higher than level 3. In other words, the user is allowed to generate a map with a map security level that is equal to or lower than the user security level of the user. As described above, the map security level of the map controls how much information is shown on the map to the user. The map security manager ensures that only those maps with information that the user is allowed to access are generated for the user.

In some embodiments, if the map security manager determines that the requested map security level does not satisfy the first security condition at the process 606, the method 600 loops back to the process 602 to continue receiving a map request. According to some embodiments, the map security manager generates a notification to the user indicating that the map request has been denied. For example, the notification may state that the user is not authorized to generate a map with the requested map security level. If, however, the map security manager determines that the requested map security level satisfies the first security condition at the process 606, the method 600 advances to the process 608.

At the process 608, in certain embodiments, the map security manager generates a map with the requested map security level. As described above, according to some embodiments, the map request is a request to access a pre-existing map with a predefined map security level. In such embodiments, if the predefined map security level satisfies the first security condition at the process 606, the map security manager allows the user to access the requested pre-existing map with the predefined map security level.

Once the map is generated according to the map security level, at the process 610, a query is received from the user or a software module (e.g., a software module of another system, etc.). In certain embodiments, the query indicates what type of information is being requested to be shown on the map. According to some embodiments, the query includes one or more query parameters. For example, the query parameter includes a query entity, a query entity parameter, a geospatial parameter, a sensor type, a sensor, and/or a time parameter. In some embodiments, the query is generated using one or more computing models (e.g., one or more ML models, one or more language models, one or more LLMs, etc.). For example, a software module receives at least one of the one or more query parameters and generates the query based on the at least one of the one or more query parameters. In certain embodiments, a ML model (e.g., an LLM) for generating the query is trained using one or more historical query parameters and/or one or more historical queries.

For example, in some embodiments, the query entity is an article, subject, object, being, person, creature, building, structure, and/or any existence that is detectable. For example, in some embodiments, the sensor includes a camera, video, satellite, GPS receiver, radar, sonar, radio sensor, infrared sensor, thermal sensor, LIDAR, or any sensor that generates sensor data that may be used to extract data related to an entity.

According to some embodiments, the query is a natural language query and is processed by a machine learning model (e.g., a language model, large language model (LLM)) to identify one or more query parameters based on the query and further predict additional query parameters based on the query and the one or more query parameters.

According to some embodiments, a list of predefined queries is provided to the user, and the user has an option to select a query from the list of predefined queries. For example, the list of predefined queries is presented on the same interactive display screen of a user interface that the map is presented on. In certain embodiments, some queries from the list of predefined queries are greyed out to indicate that those queries are not available to be accessed from the generated map.

At the process 612, the map security manager identifies a data feed associated with the query. According to some embodiments, the data feed is identified using an AI model, a machine learning (ML) model, a deep learning (DL) model, an image processing model, an algorithm, a rule, other computing models, a large language model (LLM), and/or a combination thereof. In some embodiments, the data feed includes video data, image data, satellite imagery data, radar data, sonar data, radio signal data, GPS data, or any other sensor data generated by a sensor.

At the process 614, the map security manager receives the data feed from the data source. The data feed includes a plurality of data items, and each data item corresponds to a corresponding data security level.

At the process 616, for each data item of the plurality of data items, the map security manager determines whether the corresponding data item satisfies a second security condition. According to some embodiments, the second security condition includes indicating whether a data item is permitted to be accessed by the user and therefore presented on the map. For example, the second security condition is based on the map security level of the map. As described above, the map security level of the map controls how much information can be accessed by the user and therefore which is shown on the map to the user. The map security manager determines whether the corresponding data security level of each data item is lower than or equal to the map security level.

According to some embodiments, the data feed is filtered through a security filter to control which data items are shown on the map based on the map security level of the map. For example, as illustrated in FIG. 4, a data feed from Data source 1 includes a plurality of data items having a data security level 1 (L1) and level 2 (L2), a data feed from Data source 2 includes a plurality of data items having a data security level 3 (L3), and a data feed from Data source 3 includes a plurality of data items having a data security level 1 (L1). The security filter filters the data items based on the data security level. For example, L1 filter filters the data items and transmits one or more data items that have the data security level 1, L2 filter filters the data items and transmits one or more data items that have the data security levels 1 and 2, and L3 filter filters the data items and transmits one or more data items that have the data security levels 1, 2, and 3.

For example, the query received from the user indicates that the user is requesting to see all aircraft data on the map. The map security manager identifies a data feed that includes plane data and receives the data feed from a data source. The data feed may include a plurality of data items including, for example, an aircraft number, an aircraft type, a length of an aircraft, and a location. As described above, each data item corresponds to a data security level. For example, the location data item corresponds to a data security level 1 (L1), the aircraft type and the length of the aircraft correspond to a data security level 2 (L2), and the aircraft number corresponds to a data security level 3 (L3).

At the process 618, the one or more data items of the plurality of data items that satisfy the second security condition are added on the map. For example, if the map security level of the map is level 1, the data items that correspond to the data security level of 1 are shown on the map. If the map security level of the map is level 2, the data items that correspond to the data security level of 1 and 2 are shown on the map. If the map security level of the map is level 3, the data items that correspond to the data security level of 1, 2, and 3 are shown on the map. In other words, the data items that have the data security level higher than the map security level will not be shown on the map. Additionally, it should be appreciated that the result of the same query may include a different amount of information based on the map security level of the map that the result is being presented in. In certain embodiments, for a map corresponding to any map security level, unclassified data items can be added and/or shown on the map.

According to some embodiments, the user can restrict what type of data items are shown on the map. For example, if the map corresponds to the map security level 3, the map security manager provides an option for the user to choose to view data items that have the corresponding data security level 1, 2, 3, or any combination thereof.

According to certain embodiments, the map security manager processes or learn the data feed using a machine learning model to answer questions related to the plurality of data items of the data feed. For example, if the map corresponds to the map security level 3, the data items that correspond to the data security level 1, 2, and 3 are shown on the map. However, the data feed may only have the data items with the data security level 1 and 3. In such an example, if the user asks for all the data security levels (e.g., different classifications) associated with the data feed, the map security manager can provide an answer indicating that the data feed includes the data items that correspond to the data security level 1 and 3 using one or more machine learning model (e.g., a language model, large language model (LLM)).

According to some embodiments, the user may ask if any unclassified data item (e.g., a data item that is public and requires no data security) was identified in the data feed. In certain embodiments, the map security manager can also identify any unclassified data item (e.g., a data item with an unassigned data security level) in the data feed using one or more machine learning model (e.g., a language model, large language model (LLM)). In some embodiments, the map security manager can generate a query result using one or more computing models (e.g., a ML model, a language model, an LLM, etc.). In certain embodiments, the map security manager can train a ML model (e.g., a language model, an LLM, etc.) using one or more historical queries and one or more historical query results.

Subsequently, the method 600 loops back to the process 614 to continually receive subsequent data feed from the data source as the subsequent data feed is generated by the data source to update the map. It should be appreciated that the map security manager processes and filters the data feed as it is being received in near real-time (e.g., less than 1 second, less than 3 seconds, less than 5 seconds, etc.) and update the map accordingly.

Additionally, according to some embodiments, the user can share the generated map with another user. Upon receiving a share request from the user, the map security manager determine whether a security level of another user is higher than or equal to the map security level of the shared map. If the security level of another user is higher than or equal to the map security level of the map, the map is shared with another user.

However, if the security level of the second user is lower than the map security level of the map, the shared request is denied and a notification is generated to indicate why the share request is denied. The notification is presented to the user.

According to certain embodiments, a method for generating and managing a security level-aware map is provided. The method comprising: receiving a map request from a first user to generate a map with a map security level, determining if the map security level satisfies a first security condition, in response to determining that the map security level satisfies the first security level threshold, generating the map with the map security level, receiving a query from the first user, the query including one or more query parameters, identifying a data feed associated with the query, receiving the data feed from a data source, the data feed including a plurality of data items and each data item corresponding to a corresponding data security level, for each data item of the plurality of data items, determining whether the data item satisfies a second security condition, and adding one or more data items of the plurality of data items that satisfy the second security condition on the map. For example, the method is implemented according to at least Figure 6.

In some embodiments, the one or more query parameters include at least one selected from a group consisting of a query entity, a query entity parameter, a geospatial parameter, a sensor type, a sensor, and a time parameter.

In some embodiments, the identifying a data feed associated with the query further comprises identifying the data feed based on the one or more query parameters using a machine learning model, wherein the data feed includes data related to the one or more query parameters from one or more sensors.

In some embodiments, the identifying a data feed associated with the query further comprises: receiving a selection of one or more data feeds, selecting the data feed from the one or more data feeds based on the one or more query parameters.

In some embodiments, the map request includes a request to access a preexisting map with the map security level.

In some embodiments, the first security condition includes a criterion indicating whether the user has permission to generate the map.

In some embodiments, the determining if the map security level satisfies a first security condition further comprises determining if the map security level is lower than or equal to a user security level of the first user.

In some embodiments, the second security condition includes a criterion indicating whether a data item is permitted to be presented on the map.

In some embodiments, the determining whether a data item satisfies the second security condition further comprises determining whether the corresponding data security level of the data item is lower than or equal to the map security level.

In some embodiments, the method further comprises: in response to determining that the map security level does not satisfy the first security condition, generating a notification indicating why the map request is denied, and presenting the notification to the first user.

In some embodiments, the method further comprises: receiving a share request from the first user to share the map with a second user, determining whether a security level of the second user is higher than or equal to the map security level of the map, and in response to determining that the security level of the second user is higher than or equal to the map security level of the map, sharing the map with the second user.

In some embodiments, the method further comprises: in response to determining that the security level of the second user is lower than the map security level of the map, generating a notification indicating why the share request is denied, and presenting the notification to the first user.

In some embodiments, the method further comprises: continually receiving subsequent data feed from the data source in near real-time (e.g., less than 1 second, less than 3 seconds, less than 5 seconds, etc.) as the subsequent data feed is generated by the data source, determining whether one or more data items of the subsequent data feed satisfy the second security condition, and updating the map to provide one or more data items of the subsequent data feed that satisfy the second condition.

According to certain embodiments, a computing device for generating and managing a security level-aware map is provided. The computing device comprising: a processor, a memory having a plurality of instructions stored thereon that, when executed by the processor, causes the computing device to: receive a map request from a first user to generate a map with a map security level, determine if the map security level satisfies a first security condition, in response to determination that the map security level satisfies the first security level threshold, generate the map with the map security level, receive a query from the first user, the query including one or more query parameters, identify a data feed associated with the query, receive the data feed from a data source, the data feed including a plurality of data items and each data item corresponding to a corresponding data security level, for each data item of the plurality of data items, determine whether the data item satisfies a second security condition, and add one or more data items of the plurality of data items that satisfy the second security condition on the map. For example, the computing device is implemented according to at least Figure 1, Figure 2, and/or Figure 4.

In some embodiments, to determine if the map security level satisfies the first security condition comprises to determine if the map security level is lower than or equal to a user security level of the first user.

In some embodiments, the second security condition includes a criterion indicating whether a data item is permitted to be presented on the map.

In some embodiments, to determine whether a data item satisfies the second security condition comprises to determine whether the corresponding data security level of the data item is lower than or equal to the map security level.

In some embodiments, the plurality of instructions, when executed, further cause the computing device to: in response to determination that the map security level does not satisfy the first security condition, generate a notification indicating why the map request is denied, and present the notification to the first user.

In some embodiments, the plurality of instructions, when executed, further cause the computing device to: receive a share request from the first user to share the map with a second user, determine whether a security level of the second user is higher than or equal to the map security level of the map, and in response to determination that the security level of the second user is higher than or equal to the map security level of the map, share the map with the second user.

In some embodiments, the plurality of instructions, when executed, further cause the computing device to: in response to determination that the security level of the second user is lower than the map security level of the map, generate a notification indicating why the share request is denied, and present the notification to the first user.

In some embodiments, the plurality of instructions, when executed, further cause the computing device to: continually receive subsequent data feed from the data source in near real-time as the subsequent data feed is generated by the data source, determine whether one or more data items of the subsequent data feed satisfy the second security condition, and update the map to provide one or more data items of the subsequent data feed that satisfy the second condition.

According to certain embodiments, a non-transitory computer-readable medium storing instructions for generating and managing a security level-aware map, the instructions when executed by one or more processors of a computing device, cause the computing device to receive a map request from a first user to generate a map with a map security level, determine if the map security level satisfies a first security condition, in response to determination that the map security level satisfies the first security level threshold, generate the map with the map security level, receive a query from the first user, the query including one or more query parameters, identify a data feed associated with the query, receive the data feed from a data source, the data feed including a plurality of data items and each data item corresponding to a corresponding data security level, for each data item of the plurality of data items, determine whether the data item satisfies a second security condition, and add one or more data items of the plurality of data items that satisfy the second security condition on the map. For example, the computing device is implemented according to at least Figure 1, Figure 2, and/or Figure 4.

In some embodiments, the one or more query parameters include at least one selected from a group consisting of a query entity, a query entity parameter, a geospatial parameter, a sensor type, a sensor, and a time parameter.

In some embodiments, to identify a data feed associated with the query comprises to identify the data feed based on the one or more query parameters using a machine learning model, wherein the data feed includes data related to the one or more query parameters from one or more sensors.

In some embodiments, the instructions when executed by the one or more processors further cause the computing device to: receive a selection of one or more data feeds, and select the data feed from the one or more data feeds based on the one or more query parameters.

In some embodiments, the map request includes a request to access a preexisting map with the map security level.

In some embodiments, to determine if the map security level satisfies a first security condition comprises to determine if the map security level is lower than or equal to a user security level of the first user.

In some embodiments, the first security condition includes a criterion indicating whether the user has permission to generate the map, and the second security condition includes a criterion indicating whether a data item is permitted to be presented on the map.

In some embodiments, to determine whether a data item satisfies the second security condition comprises to determine whether the corresponding data security level of the data item is lower than or equal to the map security level.

In some embodiments, the instructions when executed by the one or more processors further cause the computing device to: in response to the determination that the map security level does not satisfy the first security condition, generate a notification indicating why the map request is denied, and present the notification to the first user.

In some embodiments, the instructions when executed by the one or more processors further cause the computing device to: receive a share request from the first user to share the map with a second user, determine whether a security level of the second user is higher than or equal to the map security level of the map, and in response to the determination that the security level of the second user is higher than or equal to the map security level of the map, share the map with the second user.

In some embodiments, the instructions when executed by the one or more processors further cause the computing device to: in response to the determination that the security level of the second user is lower than the map security level of the map, generate a notification indicating why the share request is denied, and present the notification to the first user.

In some embodiments, the instructions when executed by the one or more processors further cause the computing device to: continually receive subsequent data feed from the data source in near real-time as the subsequent data feed is generated by the data source, determine whether one or more data items of the subsequent data feed satisfy the second security condition, and update the map to provide one or more data items of the subsequent data feed that satisfy the second condition.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated.

## Claims

1. A method (600) for generating and managing a security level-aware map, the method being performed by one or more processors of a computing device and comprising:
receiving (602) a map request from a first user to generate a map with a map security level;
determining (604) if the map security level satisfies a first security condition comprising determining if the map security level is lower than or equal to a user security level of the first user;
in response to determining that the map security level satisfies the first security condition, generating (608) the map with the map security level;
receiving (610) a query from the first user, the query including one or more query parameters;
identifying (612) a data feed associated with the query;
receiving (614) the data feed from a data source, the data feed including a plurality of data items and each data item corresponding to a corresponding data security level;
for each data item of the plurality of data items, determining (616) whether the data item satisfies a second security condition by determining whether the corresponding data security level of the data item is lower than or equal to the map security level; and
adding (618) one or more data items of the plurality of data items that satisfy the second security condition on the map.

2. The method of claim 1, wherein the one or more query parameters include at least one selected from a group consisting of a query entity, a query entity parameter, a geospatial parameter, a sensor type, a sensor, and a time parameter.

3. The method of claim 1 or claim 2, wherein the identifying a data feed associated with the query comprises identifying the data feed based on the one or more query parameters using a machine learning model, wherein the data feed includes data related to the one or more query parameters from one or more sensors.

4. The method of claim 1 or claim 2, wherein the identifying a data feed associated with the query comprises:
receiving a selection of one or more data feeds, and
selecting the data feed from the one or more data feeds based on the one or more query parameters.

5. The method of any preceding claim, wherein the map request includes a request to access a preexisting map with the map security level.

6. The method of any preceding claim, wherein the first security condition includes a criterion indicating whether the first user has permission to generate the map, and the second security condition includes a criterion indicating whether a data item is permitted to be presented on the map.

7. The method of any preceding claim, further comprising:
receiving a share request from the first user to share the map with a second user;
determining whether a security level of the second user is higher than or equal to the map security level of the map; and
in response to determining that the security level of the second user is higher than or equal to the map security level of the map, sharing the map with the second user.

8. The method of claim 7, further comprising:
in response to determining that the security level of the second user is lower than the map security level of the map, generating a notification indicating why the share request is denied; and
presenting the notification to the first user.

9. The method of any preceding claim, further comprising:
continually receiving subsequent data feed from the data source in near real-time as the subsequent data feed is generated by the data source;
determining whether one or more data items of the subsequent data feed satisfy the second security condition; and
updating the map to provide one or more data items of the subsequent data feed that satisfy the second condition.

10. A computing device (200) for generating and managing a security level-aware map, the computing device comprising:
a processor (204); and
a memory (212) having a plurality of instructions stored thereon that, when executed by the processor, causes the computing device to perform the method of any preceding claim.

11. A non-transitory computer-readable medium storing instructions for generating and managing a security level-aware map, the instructions when executed by one or more processors of a computing device, cause the computing device to perform the method of any of claims 1 to 9.

## Patentansprüche

1. Verfahren (600) zum Generieren und Verwalten einer sicherheitsstufenbezogenen Karte, wobei das Verfahren durch einen oder mehrere Prozessoren einer Rechenvorrichtung durchgeführt wird und Folgendes umfasst:
Empfangen (602) einer Kartenanforderung von einem ersten Benutzer, um eine Karte mit einer Kartensicherheitsstufe zu generieren;
Bestimmen (604), ob die Kartensicherheitsstufe eine erste Sicherheitsbedingung erfüllt, die das Bestimmen umfasst, ob die Kartensicherheitsstufe niedriger als eine oder gleich einer Benutzersicherheitsstufe des ersten Benutzers ist;
als Reaktion auf das Bestimmen, dass die Kartensicherheitsstufe die erste Sicherheitsbedingung erfüllt, Generieren (608) der Karte mit der Kartensicherheitsstufe;
Empfangen (610) einer Abfrage von dem ersten Benutzer, wobei die Abfrage einen oder mehrere Abfrageparameter beinhaltet;
Identifizieren (612) eines Datenfeeds, der der Abfrage zugeordnet ist;
Empfangen (614) des Datenfeeds von einer Datenquelle, wobei der Datenfeed eine Vielzahl von Datenelementen beinhaltet und jedes Datenelement einer entsprechenden Datensicherheitsstufe entspricht;
für jedes Datenelement der Vielzahl von Datenelementen, Bestimmen (616), ob das Datenelement eine zweite Sicherheitsbedingung erfüllt, indem bestimmt wird, ob die entsprechende Datensicherheitsstufe des Datenelements niedriger als die oder gleich der Kartensicherheitsstufe ist; und
Hinzufügen (618) eines oder mehrerer Datenelemente von der Vielzahl von Datenelementen, die die zweite Sicherheitsbedingung erfüllen, auf der Karte.

2. Verfahren nach Anspruch 1, wobei der eine oder die mehreren Abfrageparameter mindestens einen beinhalten, der ausgewählt ist aus einer Gruppe bestehend aus einer Abfrageentität, einem Abfrageentitätsparameter, einem raumbezogenen Parameter, einem Sensortyp, einem Sensor und einem Zeitparameter.

3. Verfahren nach Anspruch 1 oder Anspruch 2, wobei das Identifizieren eines Datenfeeds, der der Abfrage zugeordnet ist, das Identifizieren des Datenfeeds basierend auf dem einen oder den mehreren Abfrageparametern unter Verwendung eines Modells für maschinelles Lernen umfasst, wobei der Datenfeed Daten beinhaltet, die sich auf den einen oder die mehreren Abfrageparameter von einem oder mehreren Sensoren beziehen.

4. Verfahren nach Anspruch 1 oder Anspruch 2, wobei das Identifizieren eines Datenfeeds, die der Abfrage zugeordnet ist, Folgendes umfasst:
Empfangen einer Auswahl von einem oder mehreren Datenfeeds, und
Auswählen des Datenfeeds aus dem einen oder den mehreren Datenfeeds basierend auf dem einen oder den mehreren Abfrageparametern.

5. Verfahren nach einem vorhergehenden Anspruch, wobei die Kartenanforderung eine Anforderung beinhaltet, auf eine bereits vorhandene Karte mit der Kartensicherheitsstufe zuzugreifen.

6. Verfahren nach einem vorhergehenden Anspruch, wobei die erste Sicherheitsbedingung ein Kriterium beinhaltet, das angibt, ob der erste Benutzer die Berechtigung zum Generieren der Karte aufweist, und die zweite Sicherheitsbedingung ein Kriterium beinhaltet, das angibt, ob ein Datenelement auf der Karte ausgestellt werden darf.

7. Verfahren nach einem vorhergehenden Anspruch, ferner umfassend:
Empfangen einer Teilungsanforderung von dem ersten Benutzer, die Karte mit einem zweiten Benutzer zu teilen;
Bestimmen, ob eine Sicherheitsstufe des zweiten Benutzers höher als die oder gleich der Kartensicherheitsstufe der Karte ist; und
als Reaktion auf das Bestimmen, dass die Sicherheitsstufe des zweiten Benutzers höher als die oder gleich der Kartensicherheitsstufe der Karte ist, Teilen der Karte mit dem zweiten Benutzer.

8. Verfahren nach Anspruch 7, ferner umfassend:
als Reaktion auf das Bestimmen, dass die Sicherheitsstufe des zweiten Benutzers niedriger als die Kartensicherheitsstufe der Karte ist, Generieren einer Benachrichtigung, die angibt, warum die Teilungsanforderung abgelehnt wird; und
Ausstellen der Benachrichtigung an den ersten Benutzer.

9. Verfahren nach einem vorhergehenden Anspruch, ferner umfassend:
kontinuierliches Empfangen eines nachfolgenden Datenfeeds von der Datenquelle in nahezu Echtzeit, wenn der nachfolgende Datenfeed von der Datenquelle generiert wird;
Bestimmen, ob ein oder mehrere Datenelemente des nachfolgenden Datenfeeds die zweite Sicherheitsbedingung erfüllen; und
Aktualisieren der Karte, um ein oder mehrere Datenelemente des nachfolgenden Datenfeeds bereitzustellen, die die zweite Bedingung erfüllen.

10. Rechenvorrichtung (200) zum Generieren und Verwalten einer sicherheitsstufenbezogenen Karte, wobei die Rechenvorrichtung Folgendes umfasst:
einen Prozessor (204); und
einen Speicher (212), auf dem eine Vielzahl von Anweisungen gespeichert ist, die, wenn sie durch den Prozessor ausgeführt werden, die Rechenvorrichtung veranlassen, das Verfahren nach einem vorhergehenden Anspruch durchzuführen.

11. Nicht-flüchtiges computerlesbares Medium, das Anweisungen zum Generieren und Verwalten einer sicherheitsstufenbezogenen Karte speichert, wobei die Anweisungen, wenn sie durch einen oder mehrere Prozessoren einer Rechenvorrichtung ausgeführt werden, die Rechenvorrichtung veranlassen, das Verfahren nach einem der Ansprüche 1 bis 9 durchzuführen.

## Revendications

1. Procédé (600) permettant la génération et la gestion d'une carte sensible au niveau de sécurité, le procédé étant réalisé par un ou plusieurs processeurs d'un dispositif informatique et comprenant :
la réception (602) d'une demande de carte en provenance d'un premier utilisateur pour générer une carte avec un niveau de sécurité de carte ;
la détermination (604) pour savoir si le niveau de sécurité de carte satisfait à une première condition de sécurité comprenant la détermination pour savoir si le niveau de sécurité de carte est inférieur ou égal à un niveau de sécurité d'utilisateur du premier utilisateur ;
en réponse à la détermination que le niveau de sécurité de la carte satisfait à la première condition de sécurité, la génération (608) de la carte avec le niveau de sécurité de carte ;
la réception (610) d'une interrogation en provenance du premier utilisateur, l'interrogation comprenant un ou plusieurs paramètres d'interrogation ;
l'identification (612) d'un flux de données associé à l'interrogation ;
la réception (614) du flux de données en provenance d'une source de données, ledit flux de données comprenant une pluralité d'éléments de données et chaque élément de données correspondant à un niveau de sécurité de données correspondant ;
pour chaque élément de données de la pluralité d'éléments de données, la détermination (616) pour savoir si l'élément de données satisfait à une seconde condition de sécurité par la détermination pour savoir si le niveau de sécurité des données correspondant de l'élément de données est inférieur ou égal au niveau de sécurité de la carte ; et
l'ajout (618) d'un ou de plusieurs éléments de données de la pluralité d'éléments de données qui satisfont à la seconde condition de sécurité sur la carte.

2. Procédé de la revendication 1, ledit ou lesdits paramètres d'interrogation comprenant au moins un sélectionné dans un groupe étant constitué d'une entité d'interrogation, d'un paramètre d'entité d'interrogation, d'un paramètre géospatial, d'un type de capteur, d'un capteur et d'un paramètre temporel.

3. Procédé de la revendication 1 ou de la revendication 2, ladite identification d'un flux de données associé à l'interrogation comprenant l'identification du flux de données sur la base du ou des paramètres d'interrogation à l'aide d'un modèle d'apprentissage automatique, ledit flux de données comprenant des données relatives au ou aux paramètres d'interrogation provenant d'un ou plusieurs capteurs.

4. Procédé de la revendication 1 ou de la revendication 2, ladite identification d'un flux de données associé à l'interrogation comprenant :
la réception d'une sélection d'un ou plusieurs flux de données, et
la sélection du flux de données à partir du ou des flux de données sur la base du ou des paramètres d'interrogation.

5. Procédé d'une quelconque revendication précédente, ladite demande de carte comprenant une demande d'accès à une carte préexistante avec le niveau de sécurité de carte.

6. Procédé d'une quelconque revendication précédente, ladite première condition de sécurité comprenant un critère indiquant si le premier utilisateur possède ou non la permission de générer la carte, et ladite seconde condition de sécurité comprenant un critère indiquant si un élément de données est autorisé ou non à être présenté sur la carte.

7. Procédé d'une quelconque revendication précédente, comprenant en outre :
la réception d'une demande de partage en provenance du premier utilisateur pour partager la carte avec un second utilisateur ;
la détermination pour savoir si un niveau de sécurité du second utilisateur est supérieur ou égal au niveau de sécurité de la carte ; et
en réponse à la détermination que le niveau de sécurité du second utilisateur est supérieur ou égal au niveau de sécurité de carte de la carte, le partage de la carte avec le second utilisateur.

8. Procédé de la revendication 7, comprenant en outre :
en réponse à la détermination que le niveau de sécurité du second utilisateur est inférieur au niveau de sécurité de la carte, la génération d'une notification indiquant la raison pour laquelle la demande de partage est refusée ; et
présenter la notification au premier utilisateur.

9. Procédé d'une quelconque revendication précédente, comprenant en outre :
la réception continue du flux de données ultérieur en provenance de la source de données en temps quasi réel tandis que le flux de données ultérieur est généré par la source de données ;
la détermination pour savoir si un ou plusieurs éléments de données du flux de données ultérieur satisfont à la seconde condition de sécurité ; et
la mise à jour de la carte pour fournir un ou plusieurs éléments de données du flux de données ultérieur qui satisfont à la seconde condition.

10. Dispositif informatique (200) destiné à générer et gérer une carte sensible au niveau de sécurité, le dispositif informatique comprenant :
un processeur (204) ; et
une mémoire (212) sur laquelle est stockée une pluralité d'instructions qui, lorsqu'elles sont exécutées par le processeur, amènent le dispositif informatique à réaliser le procédé d'une quelconque revendication précédente.

11. Support non transitoire lisible par ordinateur stockant des instructions pour générer et gérer une carte sensible au niveau de sécurité, les instructions lorsqu'elles sont exécutées par un ou plusieurs processeurs d'un dispositif informatique, amènent le dispositif informatique à réaliser le procédé de l'une quelconque des revendications 1 à 9.
